# EUROPÄISCHE PATENTSCHRIFT

(11) **EP 3 115 746 B1**
(45) Veröffentlichungstag und Bekanntmachung des Hinweises auf die Patenterteilung: **10.03.2021**
(21) Anmeldenummer: 15175910.7
(22) Anmeldetag: 08.07.2015
(51) Int. Cl.: G01C 9/28, G01C 25/00

(54) **WASSERWAAGE**
SPIRIT LEVEL
NIVEAU À BULLE

(43) Veröffentlichungstag der Anmeldung: 11.01.2017
(73) Patentinhaber: SOLA-Messwerkzeuge GmbH, 6840 Götzis (AT)
(72) Erfinder: Lässer, Roman, 6840 Götzis (AT); Scheyer, Wolfgang, 6840 Götzis (AT)
(74) Vertreter: Torggler & Hofinger Patentanwälte

(56) Entgegenhaltungen:
- EP-A1- 1 878 998
- EP-A1- 2 623 931
- DE-C- 850 955
- JP-A- H11 183 167
- JP-A- 2001 349 728

## Beschreibung

Die Erfindung betrifft eine Wasserwaage mit den Merkmalen des Oberbegriffs von Anspruch 1, sowie ein Verfahren zur Justage einer in einen Wasserwaagenkörper einer Wasserwaage eingesetzten Libelle.

Wasserwaagen bestehen meist aus einem den Wasserwaagenkörper bestehenden Profil, häufig einem Aluminium-Strangpressprofil, in welchem in einer Ausnehmung der die Libelle umfassende Libellenkörper angeordnet ist. Zur Kalibrierung der Libelle mit der Messfläche der Wasserwaage ist nach Einsetzen des Libellenkörpers eine Justage desselben erforderlich.

Dazu sind nach dem Stand der Technik verschiedene Lösungen bekannt. So zeigt beispielsweise die DE 10 2005 018678 A1 eine Wasserwaage mit einem Grundkörper und einer in einer Aufnahme des Grundkörpers eingesetzten Libelle, wobei die Libelle am Boden der Aufnahme eine Erhebung aufweist. Durch die Erhebung lässt sich die Libelle wiegenartig verkippen und durch einen schnell aushärtenden Klebstoff in der Justagelage fixieren.

Aus der DE 19911798 A1 ist eine Libellenbefestigung bekannt, nach welchem die Libelle bzw. ein Libellenhalter über ein Drehgelenk mit einem Grundkörper der Wasserwaage verbunden wird. Gemäß dieser Schrift wird also das Libellenröhrchen selbst in Relation zu einem bereits in den Wasserwaagenkörper eingesetzten Libellenkörper bewegt und auf diese Weise feinjustiert.

JP H11 183 167 A offenbart eine Wasserwaage mit einer verformbaren Halterung.

Aufgabe der vorliegenden Erfindung ist es, eine verbesserte Wasserwaage bzw. ein verbessertes Verfahren zur Justage einer in einem Wasserwaagenkörper einer Wasserwaage eingesetzten Libelle anzugeben. Gelöst werden diese Aufgaben durch eine Wasserwaage mit den Merkmalen von Anspruch 1.

Vorteilhafte Ausführungsformen sind in den abhängigen Ansprüchen angegeben.

Indem der Wasserwaagenkörper im Bereich der Ausnehmung eine Öffnung aufweist und / oder eine die Libelle aufnehmende Libellenfassung eine Öffnung aufweist, in welche Öffnung ein Justagemittel einführbar ist, wobei durch Betätigung, insbesondere Verdrehung des in die Öffnung eingeführten Justagemittels der Wasserwaagenkörper bzw. die Libellenfassung verformt und dadurch eine in die Ausnehmung eingesetzte Libelle verdreht werden kann, wird die Möglichkeit geschaffen, die Libelle durch lokale Deformation des Wasserwaagenkörpers bzw. der Libellenfassung durch Betätigung des Justagemittels besonders feinfühlig und präzise zu justieren.

Die Verformung ist in der Regel elastisch und wird durch Arretierung des Justagemittels fixiert.

Es kann vorgesehen sein, dass wobei die Öffnung im Wasserwaagenkörper und von der Ausnehmung beabstandet ausgebildet ist.

Es besteht also in diesem Fall eine Materialbrücke zwischen der Ausnehmung für die Libelle und der Öffnung im Wasserwaagenkörper zur Einführung des Justagemittels. Bei Betätigung des Justagemittels erfolgt eine Verformung des Wasserwaagenkörpers.

Es kann vorgesehen sein, dass die Öffnung im Wasserwaagenkörper und mit der Ausnehmung verbunden ausgebildet ist.

In diesem Fall geht die Öffnung in die Ausnehmung für die Libelle über. Bei Betätigung des Justagemittels erfolgt eine Verformung des Wasserwaagenkörpers.

Es kann vorgesehen sein, dass der Wasserwaagenkörper im Bereich der Ausnehmung zur Aufnahme der Libelle eine Anlagefläche aufweist, durch welche die durch Betätigung des Justagemittels verursachte Verformung auf die Libelle übertragen wird. Die Anlagefläche kann beispielsweise als Materialüberstand in Form einer Zunge ausgebildet sein. Gemäß dieser Variante erfolgt die Bewegung der Libelle auch durch Verformung des Wasserwaagenkörpers, es kann jedoch durch das Vorhandensein einer Anlagefläche eine leichter verformbare Zone oder dergleichen realisiert werden.

Bevorzugt ist vorgesehen, dass das Justagemittel als Exzenter ausgebildet ist. Auf diese Weise lässt sich eine Verdrehung des Justagemittels in eine Hubbewegung hinsichtlich der Ausnehmung für die Libelle umsetzen.

Dazu weist die Öffnung zur Aufnahme des Justagemittels vorzugsweise eine an den Exzenter angepasste Form auf. Durch Verdrehen des oder der Exzenter in den Öffnungen wird nun eine Kraft auf den Wasserwaagenkörper (bzw. auf die Libellenfassung, wenn die Öffnung in der Libellenfassung ausgebildet ist) ausgeübt, die zu einer Verkippung in Bezug auf den Wasserwaagenkörper führt, ohne dass die Libelle innerhalb der Ausnehmung eine Relativbewegung durchführt.

Das Justagemittel könnte alternativ als konische Schraube ausgebildet sein, bei deren Eindrehen ebenfalls eine Verformung des Wasserwaagenkörpers bewirkt wird.

Das Justagemittel könnte auch als Keil ausgebildet sein, der in die Offnung eingedrückt werden kann.

Besonders bevorzugt ist vorgesehen, dass der Wasserwaagenkörper ein I-Profil aufweist, wobei die Libelle im Steg des I-Profils angeordnet ist. Als Steg wird der Abschnitt zwischen den Gurten des I-Profils verstanden.

Schutz wird auch begehrt für ein Verfahren zur Justage einer in einem Wasserwaagenkörper einer Wasserwaage eingesetzten Libelle, wobei durch Betätigung, insbesondere Verdrehung, eines in die wenigstens eine Offnung im Wasserwaagenkörper oder in eine Öffnung in einer die Libelle aufnehmenden Libellenfassung eingeführten, als Exzenter, als konische Schraube oder als Keil ausgebildeten Justagemittels der Wasserwaagenkörper bzw. die Libellenfassung verformt werden und so die Ausrichtung der Libelle bezüglich des Wasserwaagenkörpers verändert wird.

Bevorzugt ist vorgesehen, dass durch das Bewegen, vorzugsweise Verdrehen des Justagemittels der Wasserwaagenkörper elastisch verformt wird. Es kann vorgesehen sein, dass nach Erreichen der Justagelage der Libelle deren Position mit Klebstoff fixiert wird.

Ein wesentlicher Vorteil der Erfindung besteht in der überaus temperaturstabilen Justage der Libelle in einer Wasserwaage. Diese Temperaturstabilität ist insbesondere bei geklebten Lösungen nicht gewährleistet, bei welchen ein Libellenkörper in einen Wasserwaagenkörper justiert und in der Justagelage verklebt wird. Da in diesem Fall die Befestigungspunkte des Libelleneinbaus nicht genau definiert sind, führt ein Durchgehen von Temperaturänderungen der Wasserwaage zu Verschiebungen des Libellenkörpers im Wasserwaagenkörper und damit zum Verlust der Justagelage. Auch bei Klemm- und Spannmethoden für den Libelleneinbau ist eine symmetrische Krafteinleitung nicht gewährleistet, wodurch ebenfalls bei Durchgehen von Temperaturänderungen die Justagelage verloren geht.

Bei elastischer Verformung des Wasserwaagenkörpers erlaubt die Erfindung auch eine Rückstellung der über Betätigung des Justagemittels bewirkten Bewegung der Libelle. Zur Abbildung größerer Wege bei der Justage der Libelle kann eine beidseitige Justage der Libelle erfolgen. Dazu sind wenigstens zwei Öffnungen zum Einführen eines Justagemittels vorgesehen.

Das Justagemittel selbst ist vorzugsweise aus dem gleichen Material wie der Wasserwaagenkörper hergestellt. Damit ist sichergestellt, dass der thermische Ausdehnungskoeffizient des Justagemittels mit dem des Wasserwaagenkörpers übereinstimmt und somit eine hohe Temperaturstabilität der Justageposition gegeben ist. Ist die Öffnung zur Aufnahme des Justagemittels in der Libellenfassung ausgebildet, ist das Justagemittel bevorzugt aus dem gleichen Material wie die Libellenfassung ausgebildet.

Das Justagemittel, bevorzugt als Exzenter ausgebildet, kann mit Hilfe eines Schraubendrehers oder einem ähnlichen Werkzeug in der Öffnung gegenüber dem Wasserwaagenkörper verdreht werden. Der Exzenter weist dazu eine geringe Steigung auf, was eine besonders feinfühlige Justage der Libelle erlaubt.

Der Exzenter kann durch seine Formgebung vorteilhaft an die Gestalt der Öffnung angepasst sein und durch eine Nase oder ähnliches vor dem Herausfallen aus dem Wasserwaagenkörper gesichert sein.

Die Öffnung zur Aufnahme des Justagemittels kann abhängig von der gewünschten Verdrehkraft ausgebildet sein. Weist also das Justagemittel gegenüber der Öffnung deutliches Spiel auf, so lässt sich das Justagemittel leicht verdrehen und die resultierende Verformung des Wasserwaagenkörpers erfolgt im Wesentlichen im elastischen Bereich. Ist hingegen die Öffnung gegenüber dem Justagemittel so bemessen, dass dieser bereits beim Einsetzen stramm sitzt, so sind größere Betätigungskräfte zum Verdrehen des Justagemittels erforderlich und es kann eine plastische Verformung des Wasserwaagenkörpers durch die Betätigung des Justagemittels erzielt werden. Ebenfalls variiert werden kann die vom Justagemittel ausgeübte Kraft über die Steigung eines Exzenters bei Ausführung des Justagemittels als Exzenter.

Eine Abstimmung der von der Betätigung des Justagemittels auf die Libelle ausgeübte Bewegung bzw. Kraft kann auch dadurch erfolgen, indem der Abstand der Öffnung zur Aufnahme des Justagemittels, zu der die Libelle aufnehmenden Ausnehmung angepasst ist. Je größer der Abstand der Öffnung zur Ausnehmung ist, desto geringer ist die auf die Libelle ausgeprägte Bewegung, die aus der Betätigung des Justagemittels resultiert.

Die Erfindung eignet sich besonders für die Anwendung bei Wasserwaagen mit einem Vollprofil-Wasserwaagenkörper, zum Beispiel einem I-Profil.

Die Erfindung wird im Folgenden durch die Figuren näher erläutert. Dabei zeigt:
Fig. 1a bis 1f verschiedene Ausführungsformen der Erfindung,
Fig. 2 eine Ausführungsform des Justagemittels,
Fig. 3 eine Ausführungsform mit Sicherung des Justagemittels,
Fig. 4 eine Wasserwaage mit einem I-Profil als Wasserwaagenkörper,
Fig. 5a bis 5c Varianten der Ausgestaltung des Justagemittels,
Fig. 6a bis 6c Varianten des Libelleneinbaus,
Fig. 7 eine Variante zur Aufnahme des Justagemittels,
Fig. 8 eine Wasserwaage mit Hohlprofil.

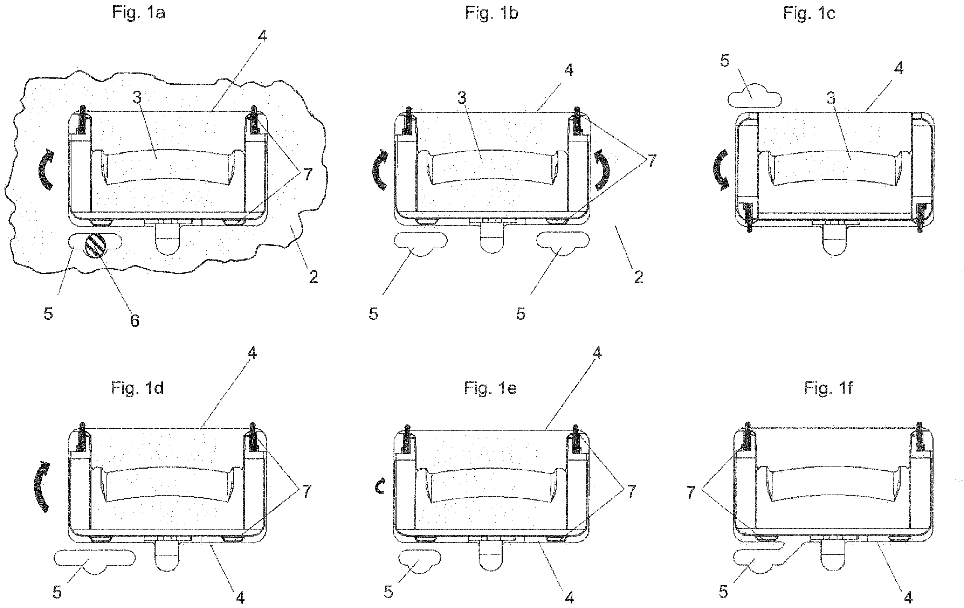

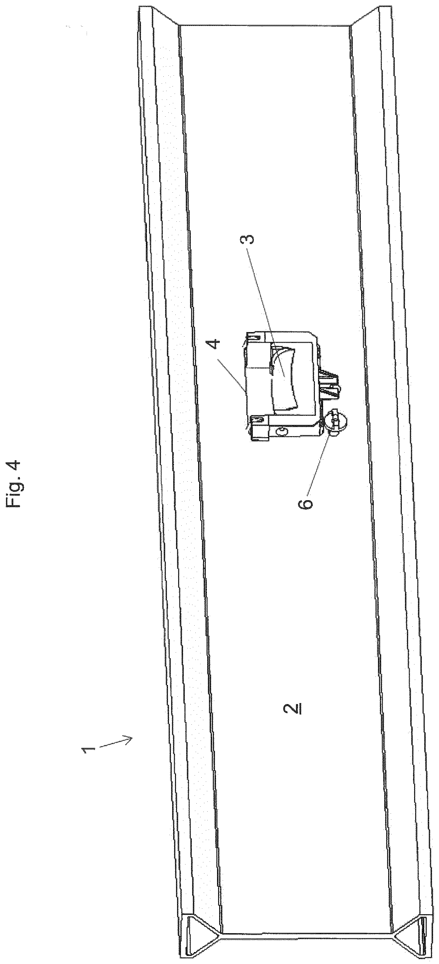

Figuren 1a bis 1f zeigen verschiedene Ausführungsformen der Anordnung einer Öffnung 5 zur Einführung eines Justagemittels 6 in einen Wasserwaagenkörper 2. Da sich die Ausführungsformen in den Figuren 1a bis 1e in den Ausgestaltungen der Öffnung 5 unterscheiden, wird die Funktion anhand der Figur 1a näher diskutiert. Der Wasserwaagenkörper 2 ist nicht vollständig gezeigt, sondern der Übersichtlichkeit halber in Figur 1a angedeutet. In den Ausführungsbeispielen gemäß den Figuren 1a bis 1f handelt es sich bei dem Wasserwaagenkörper 2 um ein I-Profil, in dessen Steg eine Libelle 3 in eine Ausnehmung 4 angeordnet ist. Bei diesem Typ von Wasserwaagen wird also kein Hohlprofil als Wasserwaagenkörper verwendet, sondern ein Vollprofil. Ein solcher Wasserwaagenkörper 2 ist beispielsweise in Figur 4 gezeigt.

Fig. 1a zeigt dabei eine erste Ausführungsform, bei welcher eine Libelle 3 in eine Ausnehmung 4 in einem Wasserwaagenkörper 2 angeordnet ist. Die Libelle 3 ist durch Befestigungsmittel 7 in der Ausnehmung 4 fixiert. Beabstandet von der Ausnehmung 4 weist der Wasserwaagenkörper 2 eine Öffnung 5 zur Aufnahme eines Justagemittels 6 auf. Gemäß diesem Ausführungsbeispiel erfolgt also eine Bewegung der Libelle 3 durch Betätigung eines in die Öffnung 5 eingesetzten Justagemittels 6 asymmetrisch und gemäß dieser Darstellung im Uhrzeigersinn. Das Justagemittel 6 ist hier als Bolzen mit elliptischem Querschnitt angedeutet. Die Bewegung der Libelle 3 entsteht durch die Verformung des Materials des Wasserwaagenkörpers 2. Die Bewegung ist durch einen Blockpfeil angedeutet. Die Libelle 3 ist in der Regel von einer Libellenfassung 11 (nicht hervorgehoben) gefasst und mit der Libellenfassung 11 in die Ausnehmung 4 eingesetzt. Die Bewegung der Libelle 3 erfolgt dann gemeinsam mit der Libellenfassung 11.

Im Ausführungsbeispiel gemäß Fig. 1b sind zwei Öffnungen 5 symmetrisch auf beiden Seiten der Libelle 3 angeordnet. Hier kann also eine Bewegung der Libelle 3 durch Betätigung eines Justagemittels 6 in den Öffnungen 5 in beide Richtungen - wie durch die Blockpfeile angedeutet - erfolgen.

Ausführungsbeispiel Fig. 1c zeigt eine Variante, bei welcher die Öffnung 5 oberhalb der Ausnehmung 4 im Wasserwaagenkörper 2 angeordnet ist.

Fig. 1d zeigt eine Ausführungsform, gemäß welcher die Öffnung 5 gegenüber der zur Aufnahme eines Justagemittels 6 erforderlichen Aussparung deutlich vergrößert ist. Diese großzügige Materialentfernung bewirkt, dass eine Betätigung eines Justagemittels 6 in der Öffnung 5 größere lokale Deformationen verursacht als in dem konträren Ausführungsbeispiel gemäß Fig. 1e, in welchem die Öffnung 5 nur geringfügig größer als das einzuführende Justagemittel 6 ausgebildet ist.

Beim Ausführungsbeispiel in Figur 1f ist die Öffnung 5 mit der Aussparung 4 verbunden. Die Öffnung 5 und die Aussparung 4 sind also hier nicht durch eine Materialbrücke des Wasserwaagenkörpers 2 getrennt.

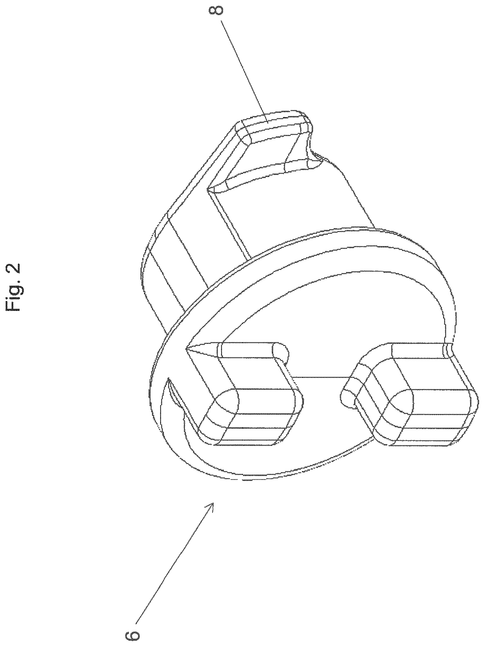

Fig. 2 zeigt in einer perspektivischen Ansicht ein als Exzenter ausgebildetes Justagemittel 6. Eine Nase 8 sichert den Exzenter vor dem Herausfallen aus der Öffnung 5 im Wasserwaagenkörper 2.

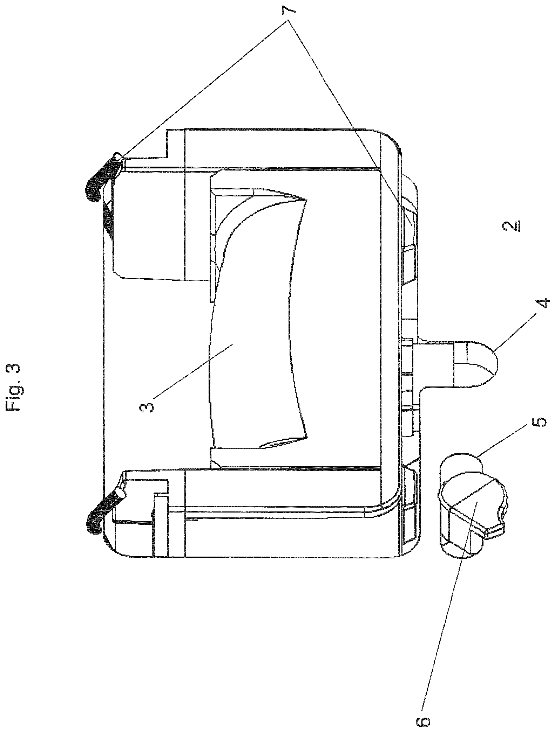

Figur 3 zeigt die Sicherung des als Exzenter ausgebildeten Justagemittels 6 in einer Ausführungsform. Die Libelle 3 ist durch Befestigungsmittel 7 in der Ausnehmung 4 fixiert.

Figur 4 zeigt den bevorzugten Fall, in welchem der Wasserwaagenkörper 2 als Vollprofil, in diesem Beispiel als I-Profil ausgebildet ist. Die Libelle 3 ist im Steg des I-Profils angeordnet.

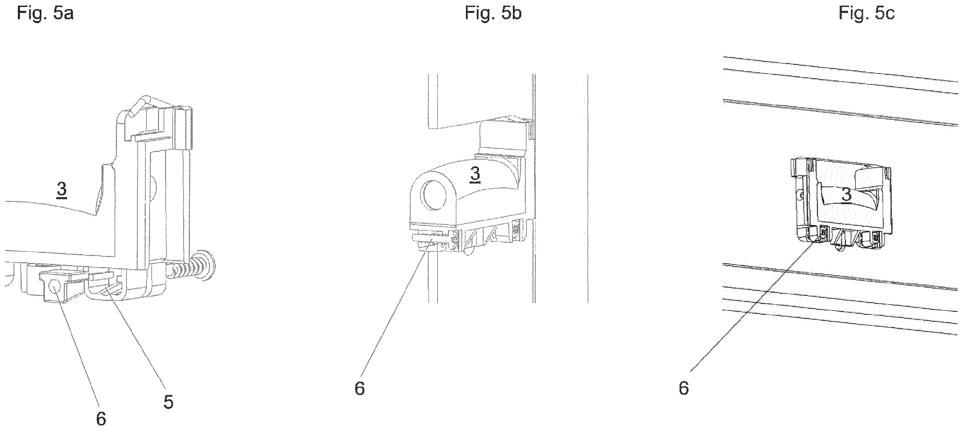

In dem Ausführungsbeispiel von Figur 5a bis 5c ist das Justagemittel 6 als Keil ausgebildet. Figuren 5a bis 5c zeigen verschiedene Ansichten davon. Der Keil kann durch Eindrehen einer Schraube weiter in die Öffnung 5 eingedrückt werden und bewirkt auf diese Weise eine Verdrehung der Libelle 3.

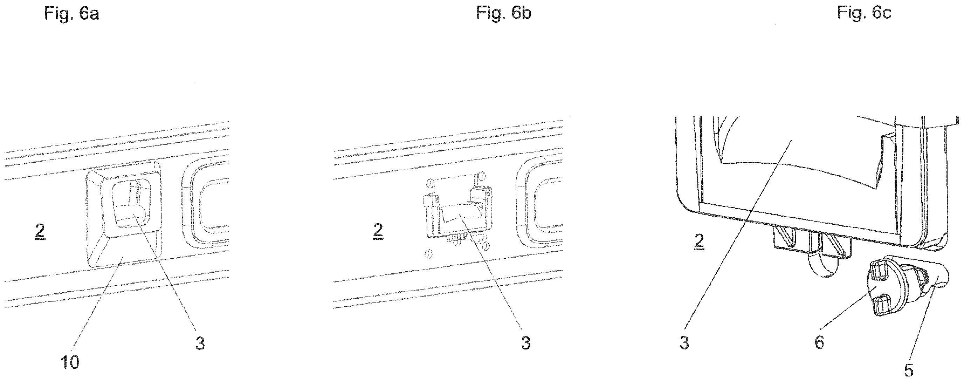

Figuren 6a bis 6c zeigen den Einbau der Libelle 3 in den Wasserwaagenkörper 2. Figur 6a zeigt dabei eine Variante mit einer Abdeckung 10 der Libelle 3, Figur 6b die Situation ohne Abdeckung 10 und Figur 6c Details der Ausnehmung 4 sowie die Öffnung 5 im Wasserwaagenkörper 2.

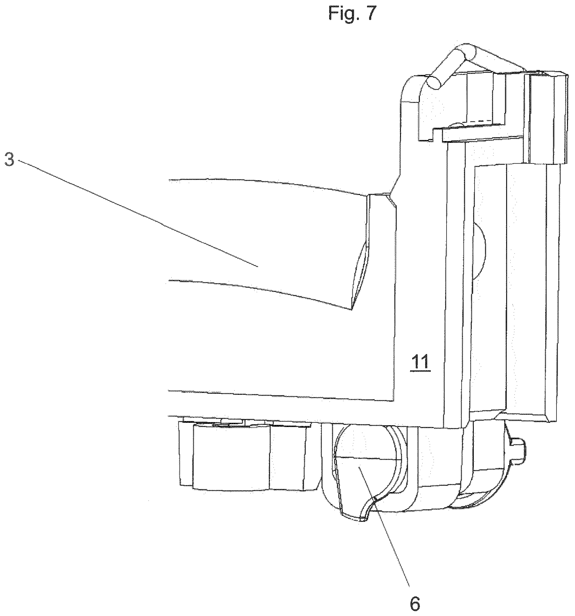

Figur 7 zeigt eine Ausführungsform, bei welcher die Öffnung 5 in einer die Libelle 3 aufnehmenden Libellenfassung 11 ausgebildet ist. Das Justagemittel 6 verformt bei Betätigung die Libellenfassung 11. Eine Bewegung der Libelle 3 wird hier durch Deformation der Libellenfassung 11 bewirkt.

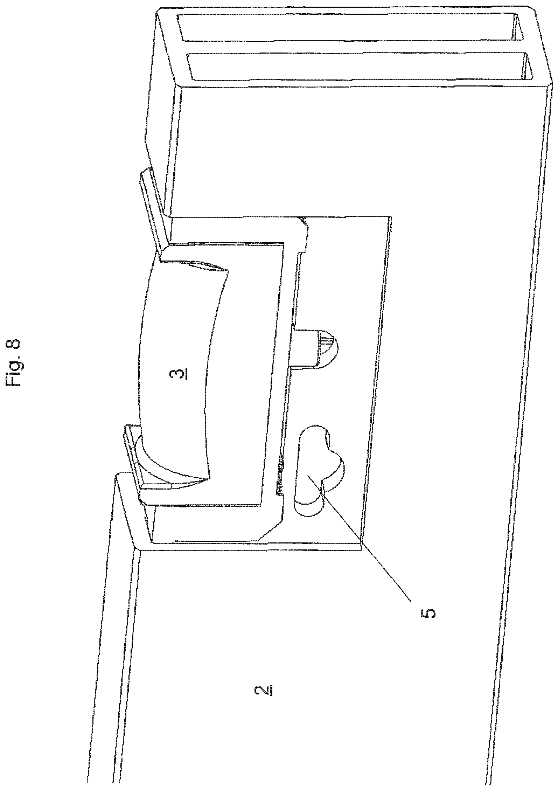

Figur 8 zeigt ein Ausführungsbeispiel mit einem Wasserwaagenkörper 2 mit einem Hohlprofil, in diesem Fall ein 2-Kammer-Profil. Die Erfindung ist also keineswegs auf die Verwendung bei Voll-Profilen, beispielsweise I-Profilen eingeschränkt.

### Liste der verwendeten Bezugszeichen:

- 1: Wasserwaage
- 2: Wasserwaagenkörper
- 3: Libelle
- 4: Ausnehmung für Libelle
- 5: Öffnung
- 6: Justagemittel
- 7: Befestigungselement
- 8: Nase
- 10: Abdeckung
- 11: Libellenfassung

## Patentansprüche

1. Wasserwaage (1) mit einem Wasserwaagenkörper (2), welcher wenigstens eine Ausnehmung (4) aufweist, in welche wenigstens eine eine Libelle (3) aufnehmende Libellenfassung (11) eingesetzt ist, wobei der Wasserwaagenkörper (2) im Bereich der Ausnehmung (4) eine Öffnung (5) aufweist, in welche Öffnung (5) ein Justagemittel (6) einführbar ist, wobei durch Betätigung des in die Öffnung (5) eingeführten Justagemittels (6) der Wasserwaagenkörper (2) verformt und dadurch eine in die Ausnehmung (4) eingesetzte, die Libelle (3) aufnehmende Libellenfassung (11) verdreht werden kann, **dadurch gekennzeichnet, dass** das Justagemittel (6) als Exzenter (7) oder als konische Schraube oder als Keil ausgebildet ist.

2. Wasserwaage (1) nach Anspruch 1, wobei die Öffnung (5) im Wasserwaagenkörper (2) und von der Ausnehmung (4) beabstandet ausgebildet ist.

3. Wasserwaage (1) nach Anspruch 1, wobei die Öffnung (5) im Wasserwaagenkörper (2) und mit der Ausnehmung (4) verbunden ausgebildet ist.

4. Wasserwaage nach wenigstens einem der vorangegangenen Ansprüche, wobei der Wasserwaagenkörper (2) ein I-Profil aufweist, wobei die Libelle (3) im Steg des I-Profils angeordnet ist.

5. Verfahren zur Justage einer in einen Wasserwaagenkörper (2) einer Wasserwaage (1) und einer eine Libelle (3) aufnehmende Libellenfassung (11) eingesetzten Libelle (3), indem durch Betätigung eines in eine Öffnung (5) im Wasserwaagenkörper (2) eingeführten Justagemittels (6) der Wasserwaagenkörper (2) verformt wird und so die Ausrichtung der Libelle (3) und der Libellenfassung (11) bezüglich des Wasserwaagenkörpers (2) verändert wird, **dadurch gekennzeichnet, dass** das Justagemittel als Exzenter (7) oder als konische Schraube oder als Keil ausgebildet ist.

6. Verfahren nach Anspruch 5, wobei nach Erreichen der Justagelage der Libelle (3) deren Position mit Klebstoff fixiert wird.

## Claims

1. A spirit level (1) having a spirit level body (2) which has at least one recess (4) into which at least one bubble tube holder (11) accommodating a bubble tube (3) is fitted, wherein the spirit level body (2) has an opening (5) in the region of the recess (4), into which opening (5) an adjustment means (6) can be introduced, wherein the spirit level body (2) is deformed by actuation of the adjustment means (6) introduced into the opening (5) and thereby a bubble tube holder (11) which accommodates the bubble tube (3) and which is inserted into the recess (4) can be rotated, **characterised in that** the adjustment means (6) is in the form of an eccentric (7) or a conical screw or a wedge.

2. A spirit level (1) according to claim 1 wherein the opening (5) is provided in the spirit level body (2) and spaced from the recess (4).

3. A spirit level (1) according to claim 1 wherein the opening (5) is provided in the spirit level body (2) and is connected to the recess (4).

4. A spirit level according to at least one of the preceding claims wherein the spirit level body (2) has an I-profile, the bubble tube (3) being arranged in the limb of the I-profile.

5. A method of adjusting a bubble tube (3) fitted into a spirit level body (2) of a spirit level (1) and a bubble tube holder (11) accommodating a bubble tube (3), in that the spirit level body (2) is deformed by actuation of an adjustment means (6) introduced into an opening (5) in the spirit level body (2) and thus the orientation of the bubble tube (3) and the bubble tube holder (11) is altered in relation to the spirit level body (2), **characterised in that** the adjustment means is in the form of an eccentric (7) or a conical screw or a wedge.

6. A method according to claim 5 wherein after the adjustment position of the bubble tube (3) is reached its position is fixed with adhesive.

## Revendications

1. Niveau à bulle (1) avec un corps de niveau à bulle (2), lequel présente au ^ moins un évidement (4), dans lequel au moins une monture de nivelle (11) logeant une nivelle (3) est utilisée, dans lequel le corps de niveau à bulle (2) présente une ouverture (5) dans la zone de l'évidement (4), dans cette ouverture (5) peut être introduit un moyen d'ajustement (6), dans lequel par actionnement du moyen d'ajustement (6) introduit dans l'ouverture (5), le corps de niveau à bulle (2) peut être déformé et, ainsi, une monture de nivelle (11) insérée dans l'évidement (4), logeant la nivelle (3) peut être tournée, **caractérisé en ce que** le moyen d'ajustement (6) est conçu comme un excentrique (7) ou comme une vis conique ou comme une clavette.

2. Niveau à bulle (1) selon la revendication 1, dans lequel l'ouverture (5) est conçue dans le corps de niveau à bulle (2) et à une certaine distance de l'évidement (4).

3. Niveau à bulle (1) selon la revendication 1, dans lequel l'ouverture (5) est conçue dans le corps de niveau à bulle (2) et reliée à l'évidement (4).

4. Niveau à bulle selon au moins l'une des revendications précédentes, dans lequel le corps de niveau à bulle (2) présente un profil en I, dans lequel la nivelle (3) est disposée dans la nervure du profil en I.

5. Procédé d'ajustement d'une nivelle (3), insérée dans un corps de niveau à bulle (2) d'un niveau à bulle (1), et d'une monture de nivelle (11) logeant une nivelle (3), du fait que le corps de niveau à bulle (2) est déformé par actionnement d'un moyen d'ajustement (6) introduit dans une ouverture (5) située dans le corps de niveau à bulle (2) et ainsi l'orientation de la nivelle (3) et de la monture de nivelle (11) est modifiée par rapport au corps de niveau à bulle (2), **caractérisé en ce que** le moyen d'ajustement est conçu comme un excentrique (7) ou comme une vis conique ou comme une clavette.

6. Procédé selon la revendication 5, dans lequel une fois atteinte la position d'ajustement de la nivelle (3), la position de cette dernière est fixée avec de la colle.
